# FASCICULE DE BREVET EUROPEEN

(11) **EP 1 653 053 B1**
(45) Date de publication et mention de la délivrance du brevet: **22.02.2012**
(21) Numéro de dépôt: 05110151.7
(22) Date de dépôt: 28.10.2005
(51) Int. Cl.: F01D 25/16, F02C 7/06

(54) **Moteur rotatif avec un palier d'arbre à deux raideurs, arbre de moteur rotatif et moyens de liaison entre un arbre de moteur rotatif et un palier**
Zwei-Steifigkeiten Vorrichtung für die Montage eines Lagers auf die Welle eines Rotationsmotor
Two stiffness device for assembling a bearing on the shaft of a rotary engine

(30) Priorité: 28.10.2004 FR 0452479
(43) Date de publication de la demande: 03.05.2006
(73) Titulaire: SNECMA, 75015 Paris (FR)
(72) Inventeur: GEREZ, Valério, 91330, Yerres (FR); JADCZAK, Edouard, Joseph, 77350, Le Mée sur Seine (FR); POINSOT-BERTHELOTt, Florian, 75012, Paris (FR)
(74) Mandataire: David, Daniel

(56) Documents cités:
- DE-A1- 10 258 528
- FR-A- 2 629 537
- FR-A- 2 631 381
- GB-A- 191 322 256
- US-A- 5 088 840

## Description

L'invention concerne le domaine des moteurs rotatifs, en particulier les moteurs à turbine à gaz.

Un moteur à turbine à gaz comporte divers éléments fonctionnels rotatifs, supportés par des arbres. Ces arbres sont supportés par des paliers, qui peuvent notamment être à roulements, à huile ou à gaz. La durée de vie des arbres et de leurs paliers est fortement conditionnée par les caractéristiques vibratoires de l'ensemble moteur : son bâti, les arbres, leurs paliers et leurs supports, notamment.

Plus l'amplitude de la réponse vibratoire, à une fréquence donnée, de chacune des parties de l'ensemble moteur est importante, plus les paliers et les éléments de la structure sont sollicités par les charges auxquelles ils sont soumis et plus leur durée de vie diminue. Les sources d'excitation vibratoire proviennent en grande partie du balourd mécanique des arbres, inévitable du fait des tolérances de fabrication. Les principales fréquences de vibration subies par l'ensemble moteur sont proches de la fréquence de rotation du moteur. Il s'agit donc de dimensionner l'ensemble moteur de façon à ce que ses éléments ne soient pas dans un état de forte réponse vibratoire à une excitation, quel que soit le régime du moteur.

La demande de brevet DE 102 58 528 AS, déposée le 08/07/2004, propose un palier pour arbre tournant de turbine à gaz, comportant une douille ou une cage correspondant à une bague intérieure et une bague extérieure.

La demande de brevet, déposée par la demanderesse le 12/01/2004 sous le numéro FR 04 00 220, propose de prévoir un support de palier comportant deux structures mécaniques portantes de raideurs différentes, combinées pour supporter le palier selon l'une ou l'autre de ces raideurs, en fonction du régime du moteur. Ainsi, on peut adapter la raideur du support de palier au régime du moteur, de manière à ce que la réponse vibratoire de l'ensemble ne soit jamais dans une zone proche de celle de sa fréquence de résonance.

Cette double structure est toutefois lourde à mettre en place. De surcroît, elle ne s'applique pas aux paliers inter-arbres, c'est-à-dire les paliers disposés entre deux arbres concentriques, puisqu'ils ne sont pas fixés à un support de palier les reliant à la

structure fixe du moteur. Il en va ainsi, par exemple, du quatrième palier, situé entre le tourillon aval de l'arbre de turbine haute pression et l'arbre de turbine basse pression, que ces arbres soient co-rotatifs ou contrarotatifs, d'un turboréacteur à double corps. Or, à ce niveau, les balourds de l'arbre de turbine haute pression engendrent de fortes charges sur le palier inter-arbres et réduisent sa durée de vie, voire peuvent provoquer une rupture du palier.

L'invention vise à proposer un dispositif permettant d'adapter la réponse vibratoire d'un palier au régime du moteur, qui soit universel.

A cet effet, l'invention concerne un moteur rotatif, comportant au moins un arbre, monté rotatif par rapport à un autre élément du moteur, fixe ou tournant, auquel il est relié par au moins un palier, le moteur pouvant fonctionner selon au moins deux régimes de fonctionnement différents, l'arbre comportant des moyens de liaison au palier présentant un état de raideur pouvant varier avec le régime de fonctionnement du moteur, caractérisé par le fait que les moyens de liaison comprennent une cage d'écureuil, comportant au moins deux points de fixation, au palier d'une part, à l'arbre d'autre part, entre lesquels s'étend une portion souple en flexion, l'arbre comporte un vérin, pouvant prendre au moins deux positions de commande de l'état de raideur de la cage d'écureuil, le vérin comporte un piston, agencé pour être déplacé, contre l'action de moyens de rappel, par une pression d'huile dans une chambre, ménagée entre le piston et l'arbre, d'une position d'état de raideur rigide à une position d'état de raideur souple, et inversement.

Par "point de fixation", on entend une zone de la cage, solidaire de l'élément auquel elle est "fixée". Dans le moteur de l'invention, les moyens de liaison dont la raideur peut varier sont situés directement entre l'arbre et le palier. Ils peuvent donc être agencés au niveau d'un palier inter-arbres, ou sur un arbre supporté par un palier fixé à la structure fixe par un support de palier, sans qu'il soit nécessaire de prévoir un deuxième support de palier.

De préférence, la raideur des moyens de liaison varie automatiquement avec le régime moteur.

Avantageusement, le vérin peut prendre une première position, sans contact avec la cage d'écureuil, dans laquelle la cage d'écureuil est dans un état de raideur souple, et une deuxième position, en butée entre une paroi de l'arbre et une paroi de la cage d'écureuil, dans laquelle la cage d'écureuil est dans un état de raideur rigide.

L'invention s'applique particulièrement à un palier situé entre l'arbre de turbine haute pression et l'arbre de turbine basse pression d'un turboréacteur à double corps, mais il va de soi que la demanderesse n'entend pas limiter l'étendue de ses droits à cette application, l'invention s'appliquant à tout arbre supporté par un palier.

L'invention concerne également un arbre de moteur rotatif, comportant des moyens de liaison à un palier présentant un état de raideur pouvant varier avec le régime de fonctionnement du moteur, caractérisé par le fait que les moyens de liaison comprennent une cage d'écureuil, comportant au moins deux points de fixation, au palier d'une part, à l'arbre d'autre part, entre lesquels s'étend une portion souple en flexion, l'arbre comporte un vérin, pouvant prendre au moins deux positions de commande de l'état de raideur de la cage d'écureuil, le vérin comporte un piston, agencé pour être déplacé, contre l'action de moyens de rappel, par une pression d'huile dans une chambre, ménagée entre le piston et l'arbre, d'une position d'état de raideur rigide à une position d'état de raideur souple, et inversement.

L'invention concerne encore des moyens de liaison entre un arbre d'un moteur rotatif et un palier relié à l'arbre, qui présentent un état de raideur pouvant varier avec le régime de fonctionnement du moteur, caractérisés par le fait qu'ils comprennent une cage d'écureuil, comportant au moins deux points de fixation, destinés à être fixés, au palier d'une part, à l'arbre d'autre part, entre lesquels s'étend une portion souple en flexion, et un vérin, pouvant prendre au moins deux positions de commande de l'état de raideur de la cage d'écureuil (5), le vérin comportant un piston, agencé pour être déplacé, contre l'action de moyens de rappel, par une pression d'huile dans une chambre, ménagée entre le piston et l'arbre, d'une position d'état de raideur rigide à une position d'état de raideur souple, et inversement.

L'invention sera mieux comprise à l'aide de la description suivante de la forme de réalisation préférée du moteur de l'invention, en référence aux planches annexées, sur lesquelles :
- la figure 1 représente une vue en coupe schématique du palier entre l'arbre de turbine basse pression et l'arbre de turbine haute pression de la forme de réalisation préférée du turboréacteur de l'invention, avec la cage d'écureuil dans un premier état de raideur ;
- la figure 2 représente une vue en coupe schématique du palier entre l'arbre de turbine basse pression et l'arbre de turbine haute pression de la forme de réalisation préférée du turboréacteur de l'invention, avec la cage d'écureuil dans un deuxième état de raideur ;
- la figure 3 représente un diagramme fréquentiel des réponses du palier à une excitation vibratoire de l'arbre de turbine haute pression du turboréacteur, dans l'état de raideur de la figure 1 ;
- la figure 4 représente un diagramme fréquentiel des réponses du palier à une excitation vibratoire de l'arbre de turbine haute pression du turboréacteur, dans l'état de raideur de la figure 2 et
- la figure 5 représente un diagramme fréquentiel dans lequel les diagrammes des figures 3 et 4 sont superposés.

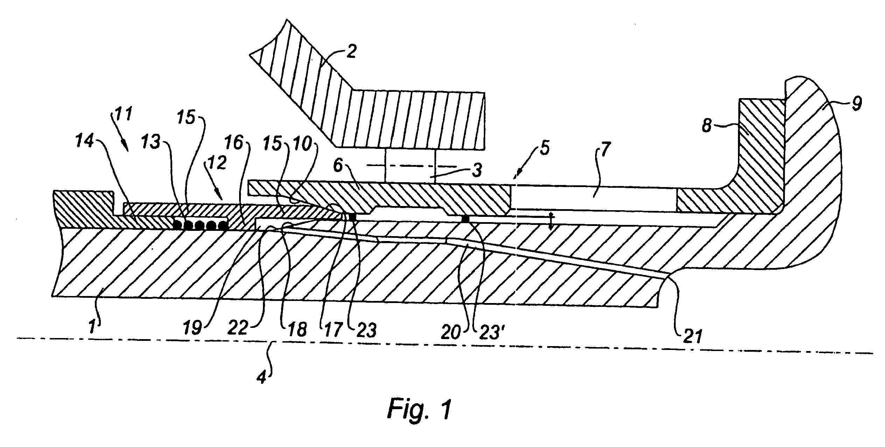

En référence à la figure 1, le moteur rotatif de l'invention, qui est ici un turboréacteur à double corps, comporte un arbre 1 de turbine basse pression, ci-après nommé arbre basse pression 1, monté rotatif concentriquement et en l'espèce à l'intérieur d'un arbre 2 de turbine haute pression, ci-après nommé arbre haute pression 2. Ce type de turboréacteur est bien connu de l'homme du métier. Les deux arbres 1, 2 sont reliés, au niveau de l'extrémité, nommée tourillon, aval de l'arbre de turbine haute pression 1, par un palier 3. Le palier 3 comporte en l'espèce une bague interne et une bague externe, entre lesquelles sont disposés des organes de roulement, non représentés.

Par amont, aval, interne, externe, on entend amont et aval par rapport au sens de l'écoulement des gaz dans le turboréacteur, interne et externe par rapport à l'axe 4 du turboréacteur, qui est l'axe autour duquel tournent les arbres 1, 2.

Une pièce 5, dénommée cage d'écureuil 5, est montée entre l'arbre basse pression 1 et le palier 3. En l'espèce, la cage d'écureuil 5 comporte une portion cylindrique pleine 6, dans sa partie amont, en aval de laquelle s'étend une portion cylindrique à colonettes 7, souple en flexion, qui comporte à son extrémité aval une bride radiale 8. La portion cylindrique pleine 6 est ainsi nommée car sa paroi est pleine sur toute sa périphérie ; mais il s'agit bien entendu d'une pièce tubulaire creuse. La portion à colonettes 7 est la portion à proprement parler en cage d'écureuil, qui comporte des barres longitudinales, ou colonettes, séparées par des évidements. Cette portion à colonettes 7 confère à la cage d'écureuil 5 une certaine souplesse en flexion, calibrée par la structure des colonettes, par leur nombre et par la nature du matériau constitutif de la cage 5, qui est dans le cas d'espèce considéré en acier.

La portion cylindrique pleine 6 de la cage d'écureuil 5 est fixée de manière solidaire à la bague interne du palier 3, en un point de fixation proche du milieu de cette portion 6. Par point de fixation, on entend une position sur la dimension longitudinale d'une pièce, pas forcément longitudinalement réduite à un point, à laquelle on peut fixer une autre pièce, le long de sa périphérie. La fixation s'entend en fait de la solidarisation, obtenue par un quelconque moyen. La bride radiale 8 est quant à elle fixée de manière solidaire à une bride radiale 9 de l'arbre basse pression 1, ici par des boulons, non représentés. La bride 8 représente un deuxième point de fixation de la cage d'écureuil 5, à l'arbre basse pression 1. Entre ses deux points de fixation, s'étend la portion à colonettes 7 la cage d'écureuil 5, souple en flexion.

La paroi amont interne de la portion cylindrique pleine 6 de la cage d'écureuil 5 comporte un chanfrein 10 de forme principalement tronconique, ci-après nommé portée, ou paroi, tronconique 10. En l'espèce, à l'extrémité amont de la portée tronconique 10, la cage d'écureuil 5 comporte, jusqu'à son extrémité amont, une portion cylindrique.

L'arbre basse pression 1 comporte, en amont de la cage d'écureuil 5, un vérin 11. Le vérin 11 comporte un piston 12, contraint par un ressort 13 en appui sur la paroi aval d'une entretoise 14 en saillie radiale sur la paroi externe de l'arbre basse pression 1. Le piston 12 comporte une portion longitudinale 15, dont une portion amont est montée coulissante sur la paroi externe de l'entretoise 14. Cette portion longitudinale 15 est en l'espèce de préférence tubulaire. Environ au milieu de sa portion longitudinale 15, le piston 12 comporte une portion 16 en saillie radiale vers l'intérieur, nommée portion radiale 16, dont la dimension radiale est égale à celle de l'entretoise 14, qui s'étend entre la portion longitudinale 15 du piston 12 et la paroi externe de l'arbre basse pression 1, en aval de l'entretoise 14. Le ressort 13 s'étend entre la paroi aval de l'entretoise 14 et la paroi amont de la portion radiale 16 du piston 12 et contraint le piston 12 vers l'aval. Le piston 12 n'est libre qu'en translation le long de l'arbre basse pression 1.

Le vérin 11 s'entend ici, soit d'une pluralité de vérins répartis circonférentiellement, soit d'un vérin annulaire, mais sa description sera faite en coupe quelle que soit sa forme de réalisation. Il peut comporter un seul ressort 13, une pluralité de ressorts 13, ou n'importe quels moyens élastiques, annulaires ou répartis de façon discrète à la circonférence de l'arbre 1.

La portion longitudinale 15 du piston 12 comporte, sur la paroi externe de son extrémité aval, une portée, ou paroi, tronconique 17, complémentaire de la portée tronconique 10 de la cage d'écureuil 5, avec laquelle elle peut venir en butée, dans une position conférant à la cage d'écureuil 5 un état de raideur dit état rigide, qui est l'état de la figure 1, sous la contrainte du ressort 13. Dans cet état, la paroi interne aval du piston 12 est en appui sur la paroi externe surélevée de l'arbre basse pression 1, qui sera vue ci-après.

L'arbre basse pression 1 comporte, en aval des positions que peut prendre la portion radiale 16 du piston 12, un épaulement 18, en l'espèce de forme tronconique, en aval duquel s'étend une paroi externe surélevée de l'arbre 1, c'est-à-dire une paroi dont la distance à l'axe 4 du turboréacteur est plus grande que celle de la paroi externe de l'arbre en contact avec la portion radiale 16 du piston 12. Cette paroi externe surélevée est de forme cylindrique et se situe à la même distance radiale de l'axe 4 que la paroi externe de l'entretoise 14. L'épaulement 18 ménage, entre les parois de l'arbre 1 et le piston 12, une chambre 19.

La chambre 19 est alimentée en huile par des canaux 20, chaque canal s'étendant longitudinalement et radialement légèrement vers l'extérieur depuis un orifice aval 21 d'admission et débouchant par un orifice amont 22 dans la chambre 19. En l'espèce, ces canaux 20 sont également les canaux d'alimentation en huile du palier 3, qu'ils alimentent par des orifices non représentés.

Si la pression d'huile est suffisante, en l'espèce si elle est plus forte que la contrainte exercée par le ressort 13, la pression dans la chambre 19 repousse, par le biais de sa portion radiale 16, le piston 12 vers l'amont, dans une nouvelle position. Cette position confère à la cage d'écureuil 5 un état de raideur dit état souple, dans lequel les portées tronconiques 10, 17 de la cage d'écureuil 5 et du piston 12 ne sont pas en contact. Dans cet état, l'extrémité aval du piston 12 ferme toujours la chambre 19, par appui sur la surface externe surélevée de l'arbre basse pression 1 ; le mouvement du piston 12 est à cet effet bridé en amont par la butée de l'extrémité amont de sa portion longitudinale 15 sur un épaulement 14' ménagé sur l'entretoise 14.

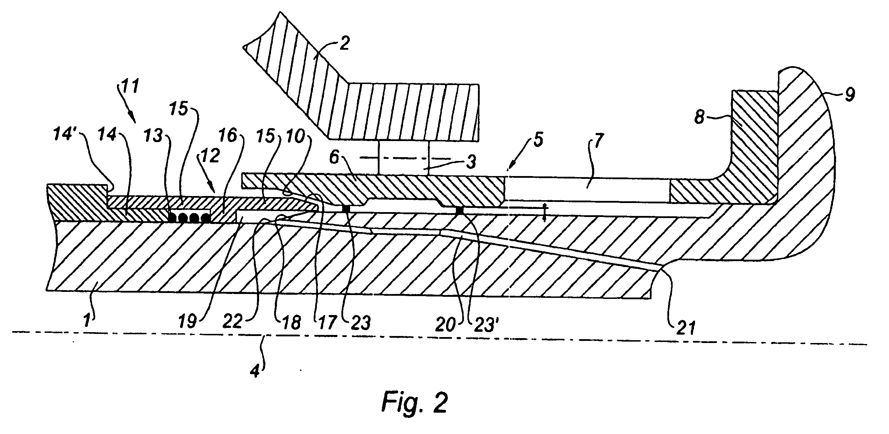

Les figure s 3 et 4 représentent chacune un diagramme fréquentiel des réponses vibratoires du palier 3 à une excitation, sous une charge due par exemple à un balourd du rotor du turboréacteur, en l'espèce du rotor haute pression, qui comporte notamment l'arbre haute pression 2, dans l'état rigide de la figure 1 et dans l'état souple de la figure 2, respectivement. Ces diagrammes représentent donc, en ordonnées, la charge dynamique "c" supportée par le palier 3, en fonction de la fréquence "f" de rotation de l'arbre haute pression 2, rapportée en abscisses, en tours par minutes. On nomme cette fréquence le régime moteur. Ni l'unité de la charge "c" ni ses valeurs n'ont d'importance ici, car il s'agit d'observer le comportement de la réponse, et non les valeurs qu'elle prend, en fonction du régime moteur. Les valeurs de la charge supportée par le palier dépendent d'ailleurs de la l'amplitude de l'excitation.

La forme de la réponse dépend notamment de l'architecture du turboréacteur, de la position axiale de ses paliers ainsi que de leur écartement, de la raideur des divers éléments constituant l'ensemble moteur, de leur masse et de leur structure. Ces diagrammes permettent ici d'avoir une idée du comportement général du palier d'un turboréacteur conforme à l'invention avec la cage d'écureuil 5 dans un état rigide ou dans un état souple. Les diagrammes présentés ont été déterminés expérimentalement et par calcul.

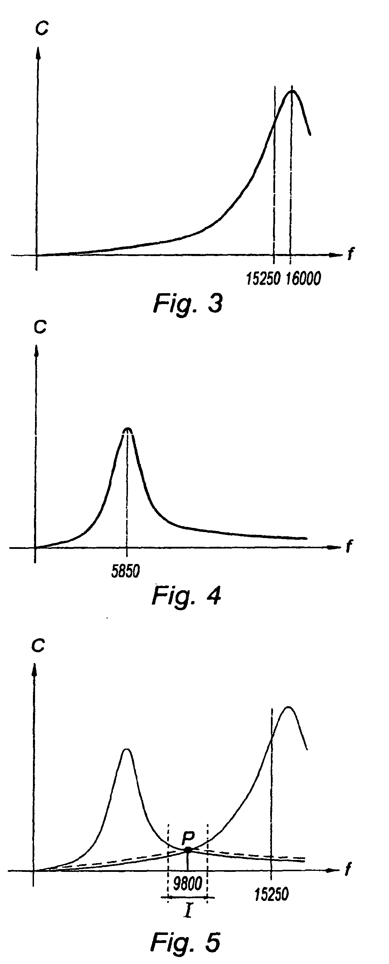

On voit sur le diagramme de la figure 3 qu'à faible régime moteur, les charges sur le palier 3, en réponse à une excitation, avec la cage d'écureuil 5 dans l'état rigide , sont assez faibles, augmentent progressivement avec le régime puis augmentent considérablement à partir d'un certain régime pour atteindre un maximum, pour une fréquence dite de résonance, en l'espèce ici considérée environ égale à 16000 tours par minute.

Dans cet état rigide, le piston 12 vient bloquer par effet de coin l'arbre basse pression 1 et la cage d'écureuil 5 l'un par rapport à l'autre au niveau de la partie amont de la cage 5. Ces deux éléments sont alors espacés d'un jeu J1, entièrement comblé à force par le piston 12, qui rend l'ensemble solidaire. Le piston 12 est en effet en appui, par sa portée tronconique 17, contre la portée tronconique 10 de la cage 5, par sa paroi interne, contre la paroi externe surélevée de l'arbre 1, entre lesquelles il exerce un effet de coin par contrainte du ressort 13 vers l'aval.

L'ensemble de l'arbre basse pression 1, du piston 12, de la cage d'écureuil 5 et de la bague interne du palier 3 est donc rigide, ce qui explique que le diagramme de la figure 3 soit tout à fait comparable aux diagrammes qui étaient obtenus pour les paliers de l'art antérieur, dont la bague interne était directement solidaire de l'arbre 1. On voit sur la figure 3 la valeur du régime moteur, en l'espèce 15250 tours par minutes, qui est aujourd'hui requise en fonctionnement comme seuil du régime moteur ; actuellement, les moteurs sont donc dimensionnés de façon à ce que la fréquence de résonance de la réponse du palier soit supérieur à ce régime requis, de manière à ce que la réponse du palier ne se situe jamais dans sa zone de valeurs maximales.

On voit sur le diagramme de la figure 4 que les charges sur le palier 3, en réponse à une excitation, avec la cage d'écureuil 5 dans l'état souple, présentent un pic de résonance à faible régime, en l'espèce ici considérée à environ 5850 tours par minute. Les charges diminuent ensuite pour devenir très faibles à haut régime.

Dans cet état souple, en référence à la figure 2, la pression d'huile dans la chambre 19 est suffisante pour contraindre le ressort 13 en compression et repousser le piston 12 en butée contre l'épaulement 14' de l'entretoise 14. La portée tronconique 17 du piston 12 n'est pas alors en contact avec la portée tronconique 10 de la cage d'écureuil 5 ; cette dernière est donc libre en flexion radiale dans le jeu J1 avec la paroi externe surélevée de l'arbre basse pression 1. La qualification de souple pour cet état provient de cette liberté qu'a la cage d'écureuil 5 de fléchir, du fait de la souplesse de sa portion à colonnettes 7. Le jeu radial de flexion pourrait être prévu plus faible que J1, par contact des portées tronconiques 10, 17 en cas de flexion trop importante, si cela était nécessaire, en dimensionnant convenablement le jeu entre la paroi amont du piston 12 et l'épaulement 14'.

Dans cet état souple, le lien entre le palier 3 et l'arbre basse pression 1 se fait donc par le biais d'un élément souple, puisque la bague intérieure du palier 3 est solidaire de la portion cylindrique pleine 6 de la cage d'écureuil 5, solidaire de l'arbre basse pression 1 par le biais de la portion à colonettes 7 et de la bride 8 de la cage d'écureuil 5, cette dernière étant fixée à la bride 9 de l'arbre basse pression 1. Il existe donc un bras de levier souple entre la bride 8 de la cage d'écureuil 5 et son point de fixation à la bague interne du palier 3, du fait de la portion à colonettes 7.

L'homme du métier était confronté au problème de la présence d'une fréquence de résonance pour la réponse du palier 3 à fort régime. Il aurait été tentant d'y remédier en prévoyant un palier 3 relié à l'arbre basse pression 1 par une cage d'écureuil 5 constamment dans son état souple. Toutefois, à faible régime, en cas de balourd sur le rotor haute pression, la souplesse de la cage d'écureuil 5 générerait une réponse fréquentielle dans le cadre de laquelle les extrémités des aubes de la turbine haute pression viendraient frotter contre leur carter de rétention et consommer les jeux prévus avec des abradables, bien connus de l'homme du métier, à ce niveau.

Il est donc souhaitable de prévoir un dispositif dans lequel la réponse du palier 3 à bas régime est celle de l'état rigide et dans lequel la réponse à haut régime est celle de l'état souple.

On voit sur la figure 5 un diagramme sur lequel les deux diagrammes précédents ont été superposés. Le vérin 11 et la cage d'écureuil 5 sont agencés pour que la réponse du palier 3 suive, à bas régime, la courbe de l'état rigide, à haut régime, la courbe de l'état souple. Ces deux courbes se coupent en un point P. Le vérin 11 et la cage d'écureuil 5 sont agencés pour que la transition entre les deux états se fasse de façon automatique, à proximité de ce point "P", dans une inévitable zone d'incertitude "I" de fréquences située autour de ce point "P". Le vérin 11 et la cage d'écureuil 5 sont calibrés de façon à ce que cette zone d'incertitude "I" soit la plus petite possible, centrée sur la fréquence du point "P", en l'espèce environ égale à 9800 tours par minute. Ainsi, la charge supportée par le palier 3 est toujours celle de la courbe dont les valeurs sont minimales, sauf éventuellement dans la zone "I", dans laquelle la différence des valeurs entre les deux courbes, pour une même fréquence, est faible.

Plusieurs formes de réalisation pour obtenir ce comportement du pal ier 3 vont maintenant être décrites.

Selon une première forme de réalisation, qui est la forme de réalisation des figures 1 et 2, le passage de l'état rigide à l'état souple, et inversement, se fait "naturellement", c'est-à-dire sans organe de commande mécanique ni asservissement électronique, grâce à la pression de l'huile dans la chambre 19. A cet effet, le volume des canaux 20 d'alimentation en huile et celui de la chambre 19, ainsi que la raideur du ressort 13, notamment, sont calibrés de façon à ce que la pression de l'huile dans la chambre 19 dépasse la contrainte du ressort 13, afin de dégager la piston 12 de la cage d'écureuil 5 et ainsi mettre cette dernière dans l'état souple, dans la zone d'incertitude "I" située ici autour de 9800 tours par minutes, et inversement. Cela est possible car, le régime moteur augmentant, la force centrifuge contraint l'huile de plus en plus fortement radialement vers l'extérieur, donc en direction de la chambre 19. La calibration des divers organes permet de s'assurer que le passage de la pression d'huile au-delà du seuil de contrainte du ressort 13 se fasse dans la zone d'incertitude "I", la pression de l'huile dépendant du régime moteur. Ainsi, la raideur de la cage d'écureuil 5 s'adapte naturellement au régime du turboréacteur, sans intervention du pilote de l'avion ou d'un asservissement électronique.

Selon une seconde forme de réalisation, un dispositif mécanique peut être agencé de façon à envoyer un débit d'huile plus ou moins important dans la chambre 19, en fonction du régime moteur. Ce dispositif mécanique peut être commandé manuellement par le pilote qui l'actionne en fonction du régime moteur, ou relié à un dispositif d'asservissement l'actionnant automatiquement en fonction du régime moteur.

Selon une troisième forme de réalisation ne faisant pas partie de la présente invention, il n'y a pas forcément de chambre 19 de rétention d'huile sous le piston 12 et un dispositif mécanique d'actionnement du vérin 11 est prévu pour changer l'état de raideur de la cage d'écureuil 5 en fonction du régime moteur, par actionnement du piston 12 vers l'amont ou vers l'aval. Ce dispositif peut être, soit commandé manuellement par le pilote de l'avion en fonction du régime moteur, soit relié à un dispositif d'asservissement l'actionnant automatiquement en fonction du régime moteur.

Grâce à l'invention, pendant les différentes phases de régime du turboréacteur, quelle que soit la forme de réalisation choisie, l'état de raideur de la cage d'écureuil 5 vis-à-vis de l'arbre basse pression est adapté pour que la réponse du palier 3 se situe toujours sur la courbe en pointillés de la figure 5, à savoir la courbe pour laquelle les charges supportés par le palier 3 sont minimales, à l'exception de la zone d'incertitude "I", comme on l'a vu plus haut. Ainsi, les charges supportées par le palier 3 sont adaptées au régime moteur par un changement de la nature comportementale de sa réponse fréquentielle, en l'espèce par un changement de courbe sur le diagramme de la figure 5. Typiquement, dans les phases pendant lesquelles l'avion est au sol, que ce soit en régime de ralenti ou pour ses déplacements, le régime moteur est inférieur à 9800 tours par minute et la cage d'écureuil 5 est maintenue dans l'état rigide, avec le piston 12 en appui sur sa portée tronconique 10 pour rendre l'ensemble rigide par effet de coin, tandis que pendant la phase de décollage puis les phases de croisière, la cage d'écureuil 5 est laissée dans l'état souple, sans contact avec le piston 12, l'huile exerçant une pression sur ce dernier, dans la chambre 19, pour le maintenir en butée contre l'épaulement 14' de l'entretoise 14.

On peut noter, sur la figure 5, qu'au -delà du seuil actuellement requis, précédemment cité, de 15250 tours par minute, si la cage d'écureuil 5 est dans l'état souple, les contraintes sur l'arbre de palier 3 sont faibles. Il s'ensuit que grâce à l'invention, il est possible d'augmenter si nécessaire le seuil maximal du régime du turboréacteur, sans que la réponse du palier 3 à une excitation vibratoire soit rédhibitoire.

L'art antérieur propose des dispositifs d'amortissement par huile des paliers des arbres, communément connus sous le nom de "squeeze" par l'homme du métier, car l'huile est compressée pour assurer sa fonction d'amortissement. Un tel dispositif peut être prévu, schématisé par les références 23, 23' sur les figures 1 et 2. Il s'agit ici de deux rainures circonférentielles prévues sur l'arbre basse pression 1, dans lesquelles sont insérées deux nervures de la cage d'écureuil 5 ; de l'huile est prévue entre les nervures et les rainures, qui est compressée selon le régime moteur et les excitations vibratoires et exerce ainsi une fonction d'amortissement. Ce dispositif d'amortissement par huile permet d'atténuer la réponse fréquentielle aux excitations du palier 3. Il n'est pas nécessaire ici, dans la mesure où les réponses aux excitations sont par ailleurs minimisées grâce à l'adaptation de la raideur de la cage d'écureuil 5, mais son action peut, d'une part s'ajouter à celle de la cage d'écureuil 5, d'autre part être efficace en cas de panne du dispositif de changement d'état de la cage 5.

L'invention a été décrite en relation avec un palier inter-arbres entre un arbre de turbine basse pression et un arbre de turbine haute pression, mais il va de soi qu'elle s'applique à tout arbre supporté par un palier, le palier pouvant être fixé, au niveau de sa bague opposée à la bague solidaire des moyens de liaison à l'arbre présentant une raideur variable, en l'espèce la bague solidaire de la cage d'écureuil, à tout autre arbre rotatif ou à une structure fixe du moteur.

Dans la suite de la description on parlera, par commodité, de la cage d'écureuil, mais il s'agit bien sûr d'une façon plus générale des moyens à raideur variable, la cage d'écureuil correspondant à leur forme de réalisation préférée.

Dans le cas, par exemple, où le palier supporte par sa bague interne un arbre rotatif et est fixé par sa bague externe à une pièce support de palier solidaire de la structure fixe du turboréacteur, le choix de la raideur de la cage d'écureuil en fonction du régime du moteur peut être fait de façon comparable, par analyse des différentes fréquences de résonance susceptibles d'apparaître en fonction de la vitesse de rotation de l'arbre. Dans l'exemple précédemment étudié, où la cage d'écureuil est solidaire de l'arbre de turbine basse pression, les charges par rapport auxquelles sont calculées les courbes de réponses fréquentielles du palier correspondent à un balourd sur l'arbre de turbine haute pression, qui se situe donc de l'autre côté du palier par rapport à la cage d'écureuil. Si le palier est fixé par sa bague externe à un support de palier relié à la structure fixe, la cage d'écureuil est solidaire de l'arbre subissant le balourd. Le comportement physique de l'ensemble est donc différent mais il en résulte, dans ce cas, que l'analyse des réponses fréquentielles du palier montre également une fréquence de résonance à bas régime dans la configuration souple de la cage d'écureuil, la configuration rigide de la cage d'écureuil présentant une fréquence de résonance à plus haut régime. Par conséquent, le dispositif peut être agencé pour que la cage d'écureuil soit en position rigide à bas régime et en configuration souple à plus haut régime. L'actionnement du vérin est alors adapté en conséquence.

Quoi qu'il en soit, selon la nature de l'arbre sur lequel la cage d'écureuil est fixée, la réponse fréquentielle du palier est analysée et la cage d'écureuil actionnée de manière à toujours se trouver dans l'état de raideur correspondant, selon les différents régimes moteur, à la courbe dont la réponse à une charge est la plus faible, sauf éventuellement dans la zone d'incertitude dans laquelle le changement de courbe est opéré, les différences de charge dans cette zone n'étant de toute façon pas très importantes.

En outre, l'invention a été décrite en relation avec un palier comportant une bague interne, fixée à la cage d'écureuil, et une bague externe, fixée à un arbre rotatif ou, comme on vient de le voir, à une structure fixe du moteur, entre lesquelles s'étendent des organes de roulement, mais il va de soi que les organes de roulement pourraient s'étendre directement, par exemple, entre deux rainures, de la cage d'écureuil 5 d'une part, de l'arbre rotatif ou de la structure fixe, d'autre part. Il pourrait aussi s'agir de tout autre type de palier, à huile ou à gaz notamment. Dans tous les cas, le palier s'étend entre un arbre ou une structure fixe et l'élément à raideur adaptable qu'est ici la cage d'écureuil, dont il permet des mouvements de rotation relativement l'un par rapport à l'autre.

Le vérin peut quant à lui être à symétrie de révolution ou constitué d'une pluralité de vérin répartis à la périphérie de l'arbre ; il y aurait dans le dernier cas une pluralité de chambres de rétention d'huile. On préfère ici l'emploi d'un piston annulaire, formant une chambre annulaire de rétention d'huile, avec une portion tronconique destinée à venir ou non en butée contre la portée annulaire de la cage d'écureuil, contraint par un ou plusieurs ressorts répartis à la circonférence de l'arbre.

On pourrait enfin prévoir plus de deux niveaux de raideur différents à l'aide de plusieurs éléments de liaison entre l'arbre et le palier, ou d'un seul élément convenablement agencé.

## Revendications

1. Moyens de liaison entre un arbre (1) d'un moteur rotatif et un palier (3) relié à l'arbre (1), qui présentent un état de raideur pouvant varier avec le régime de fonctionnement du moteur, **caractérisés par le fait qu'**ils comprennent une cage d'écureuil (5), comportant au moins deux points de fixation, destinés à être fixés, au palier (3) d'une part, à l'arbre (9) d'autre part, entre lesquels s'étend une portion (7) souple en flexion, et un vérin (11), pouvant prendre au moins deux positions de commande de l'état de raideur de la cage d'écureuil (5), le vérin (11) comportant un piston (12), agencé pour être déplacé, contre l'action de moyens de rappel (13), par une pression d'huile dans une chambre (19) ménagée entre le piston (12) et l'arbre (1) quand le piston (12) est sur l'arbre d'une position d'état de raideur rigide à une position d'état de raideur souple, et inversement.

2. Moyens de liaison selon la revendication 1, dans lesquels le vérin (11) peut prendre une première position, sans contact avec la cage d'écureuil (5), dans laquelle la cage d'écureuil (5) est dans un état de raideur souple, et une deuxième position, en butée entre une paroi de l'arbre (i) et une paroi (10) de la cage d'écureuil (5), dans laquelle la cage d'écureuil (5) est dans un état de raideur rigide.

3. Moyens de liaison selon l'une des revendications 1 et 2, formant moyens de liaison entre l'arbre de turbine basse pression et le palier inter-arbres entre l'arbre de turbine pression et l'arbre de turbine haute pression d'un turboréacteur à double corps.

4. Arbre de moteur rotatif, comportant des moyens (5) de liaison, conformes à l'une des revendications 1 à 3, à un palier (3).

5. Arbre selon la revendication 4, qui est l'arbre de turbine basse pression (1) d'un turboréacteur à double corps.

6. Moteur rotatif, comportant au moins un arbre (1) conforme à l'une des revendications 4 et 5, monté rotatif par rapport à un autre élément (2) du moteur, fixe ou tournant, auquel il est relié par au moins un palier (3).

7. Moteur rotatif selon la revendication 6, dans lequel la raideur des moyens de liaison (5) varie automatiquement avec le régime moteur.

8. Moteur rotatif selon la revendication 7, dans lequel la pression d'huile est commandée par le régime du moteur, par force centrifuge.

9. Moteur selon la revendication 8, dans lequel la pression de l'huile dans la chambre (19) varie avec la force centrifuge exercée par la rotation de l'arbre (1) du moteur.

10. Moteur rotatif selon l'une des revendications 6 à 9, qui est un turboréacteur à double corps, dans lequel l'arbre est l'arbre de turbine basse pression (1) et l'autre élément du moteur est l'arbre de turbine haute pression (2).

## Claims

1. Connecting means between a shaft (1) of a rotary engine and a bearing (3) connected to the shaft (1), which have a state of stiffness which can vary with the operating speed of the engine, **characterised in that** they comprise a squirrel cage (5) comprising at least two points of attachment, intended to be attached on the one hand to the bearing (3) and on the other hand to the shaft (9), between which a portion (7) extends which is flexible under bending, and an actuator (11) which can adopt at least two positions for controlling the state of stiffness of the squirrel cage (5), the actuator (11) comprising a piston (12) arranged so as to be displaced, against the action of return means (13), by an oil pressure in a chamber (19) when the piston is on the shaft, formed between the piston (12) and the shaft (1), from a rigid state of stiffness position to a flexible state of stiffness position and back.

2. Connecting means according to claim 1, in which the actuator (11) can adopt a first position, out of contact with the squirrel cage (5), in which the squirrel cage (5) is in a flexible state of stiffness, and a second position, in abutment between a wall of the shaft (1) and a wall (10) of the squirrel cage, in which the squirrel cage (5) is in a rigid state of stiffness.

3. Connecting means according to either claim 1 or claim 2, forming connection means between the low-pressure turbine shaft and the inter-shaft bearing between the low-pressure turbine shaft and the high-pressure turbine shaft of a twin-spool turbine engine.

4. Rotary engine shaft, comprising connecting means (5) according to any one of claims 1 to 3 for connection to a bearing (3).

5. Shaft according to claim 4, which is the low-pressure turbine shaft (1) of a twin-spool turbine engine.

6. Rotary engine, comprising at least one shaft (1) according to either claim 4 or claim 5, mounted to rotate with respect to another element (2) of the engine, fixed or rotary, to which it is connected by at least one bearing (3).

7. Rotary engine according to claim 6, wherein the stiffness of the connecting means (5) varies automatically with the engine speed.

8. Rotary engine according to claim 7, wherein the oil pressure is controlled by the engine speed, by centrifugal force.

9. Engine according to claim 8, wherein the oil pressure in the chamber varies with the centrifugal force exerted by the rotation of the shaft (1) of the engine.

10. Rotary engine according to any one of claims 6 to 9, which is a twin-spool turbine engine in which the shaft is the low-pressure turbine shaft (1) and the other element of the motor is the high-pressure turbine shaft (2).

## Patentansprüche

1. Vorrichtungen zur Verbindung zwischen einer Welle (1) eines Rotationsmotors und eines an der Welle (1) befestigten Achslagers (3), die einen Steifigkeitszustand aufweisen, der sich mit der Betriebsdrehzahl des Motors ändern kann, durch die Tatsache **gekennzeichnet**, dass sie einen Käfigläufer (5) umfassen, der über zumindest zwei Befestigungspunkte verfügt, die dazu bestimmt sind, einerseits am Achslager (3), und andererseits an der Welle (9) befestigt zu werden, und zwischen denen sich ein biegsamer Abschnitt (7) erstreckt, sowie ein Zylinder (11), der zumindest zwei Stellungen zum Ansteuern des Steifigkeitszustandes des Käfigläufers (5) einnehmen kann, wobei der Zylinder (11) einen Kolben (12) umfasst, der angeordnet ist, um durch Öldruck aus einer Kammer (19), wenn der Kolben auf die Welle ist, die in Einbaulage zwischen Kolben (12) und der Welle (1) angeordnet ist, gegen die Wirkung von Rückstellungsvorrichtungen (13) aus einer Position von hoher Steifigkeit in eine Position von geringer Steifigkeit und umgekehrt verschoben zu werden.

2. Verbindungsvorrichtungen nach Anspruch 1, bei denen der Zylinder (11) eine erste Stellung ohne Berührung des Käfigläufers (5) einnehmen kann, in der sich der Käfigläufer (5) in einem Zustand von geringer Steifigkeit befindet, und eine zweite Stellung auf Anschlag zwischen einer Wand der Welle (1) und einer Wand (10) des Käfigläufers (5), in der sich der Käfigläufer (5) in einem Zustand von hoher Steifigkeit befindet.

3. Verbindungsvorrichtungen nach einem der Ansprüche 1 und 2, zur Bildung von Verbindungsvorrichtungen zwischen der Niederdruckturbinenwelle und dem Achslager zwischen der Druckturbinenwelle und der Hochdruckturbinenwelle eines Zweistromtriebwerks.

4. Rotationsmotorwelle umfassend Verbindungsvorrichtungen (5) entsprechend einem der Ansprüche 1 bis 3 mit einem Achslager (3).

5. Welle nach Anspruch 4, die die Niederdruckturbinenwelle (1) eines Zweistromtriebwerks ist.

6. Rotationsmotor umfassend zumindest eine Welle (1) entsprechend einem der Ansprüche 4 und 5, die in Bezug auf ein weiteres festes oder drehendes Element (2) des Motors, mit dem sie zumindest durch ein Achslager (3) verbunden ist, drehend montiert ist.

7. Rotationsmotor nach Anspruch 6, in dem sich die Steifigkeit der Verbindungsvorrichtungen (5) automatisch mit der Motordrehzahl ändert.

8. Rotationsmotor nach Anspruch 7, bei dem der Öldruck durch die Motordrehzahl durch Zentrifugalkraft angesteuert wird.

9. Motor nach Anspruch 8, bei dem sich der Öldruck in der Kammer (19) je nach Zentrifugalkraft ändert, die durch die Drehung der Welle (1) des Motors ausgeübt wird.

10. Rotationsmotor nach einem der Ansprüche 6 bis 9, der ein Zweistromtriebwerk ist, bei dem die Welle die Niederdruckturbinenwelle (1) ist, und das weitere Motorelement die Hochdruckturbinenwelle (2) ist.
